# EUROPÄISCHE PATENTSCHRIFT

(11) **EP 0 611 667 B1**
(45) Veröffentlichungstag und Bekanntmachung des Hinweises auf die Patenterteilung: **29.05.1996**
(21) Anmeldenummer: 94890024.6
(22) Anmeldetag: 01.02.1994
(51) Int. Cl.: B60C 11/04, B60C 11/03

(54) **Fahrzeugluftreifen**
Vehicle tyre
Bandage pneumatique pour véhicule

(30) Priorität: 16.02.1993 AT 285/93
(43) Veröffentlichungstag der Anmeldung: 24.08.1994
(73) Patentinhaber: Semperit Reifen Aktiengesellschaft, A-2514 Traiskirchen (AT)
(72) Erfinder: Liederer, Werner, Dr., A-2514 Traiskirchen (AT); Jaeger, Gert, Ing., A-2500 Baden (AT); Arendt, Gernot, D.I., A-2512 Tribuswinkel (AT); Lux, Friedrich, D.I., A-2700 Wr. Neustadt (AT); Schmalz, Manfred, A-2352 Gumpoldskirchen (AT)
(74) Vertreter: Vinazzer, Edith

(56) Entgegenhaltungen:
- EP-A- 0 348 335
- DE-A- 3 424 796
- FR-A- 2 383 029
- US-A- 3 437 120

## Beschreibung

Die Erfindung betrifft einen Fahrzeugluftreifen mit einem Laufflächenprofil, welches im Mittelbereich zumindest eine breite, insbesondere gerade verlaufende Umfangsnut aufweist, in welche in Umfangsrichtung voneinander beabstandete seitliche Rillen einmünden.

Ein Fahrzeugreifen mit einem derartigen Laufflächenprofil ist beispielsweise aus der DE-A 34 24 796 bekannt. Dieses bekannte Laufflächenprofil weist als wesentliche Profilelemente eine Vielzahl kontinuierlicher Umfangsnuten auf, deren Breite umso größer ist, desto näher sie zur Reifenmittellinie hin gelegen sind. Zusätzlich zu diesen Umfangsnuten sind seitliche Rillen angeordnet, deren Breite von der Reifenschulter zur Reifenmitte hin progressiv größer wird. Dabei lag dieser Profilausgestaltung der Gedanke zugrunde, die Wasserabführung im Mittelteil des Laufstreifens zu verbessern, dabei jedoch die übliche Möglichkeit der Wasserabführung in den Schulterbereichen zu belassen.

Es sind in den letzten Jahren einige Anstrengungen untemommen worden, um den von Kraftfahrzeugen verursachten Straßenverkehrslärm zu vermindern. Das von einem fahrenden Kraftfahrzeug in Summe abgestrahlte und wahrnehmbare Geräusch wird als Vorbeifahrgeräusch (pass-by noise) bezeichnet. Neben dem Motorengeräusch, Windgeräuschen etc. spielt hier auch das in der Kontaktfläche Straße/Reifen entstehende Geräusch eine wesentliche Rolle. Seitens der Fahrzeughersteller sind bereits einige Maßnahmen getroffen worden, um das Vorbeifahrgeräusch zu reduzieren, beispielsweise eine deutliche Verbesserung der Dämpfungsmaßnahmen an Motoren. Grundsätzlich kann man nun sagen, daß ab einer bestimmten Fahrgeschwindigkeit, bei PKW sind das ca. 60 km/h, der von dem abrollenden Reifen herrührende Teil am Vorbeifahrgeräusch deutlich merkbar wird. Dabei spielen auch andere Einflußfaktoren eine wesentliche Rolle, so ist es beispielsweise bekannt, daß ein glatter, wenig profilierter Reifen im allgemeinen leiser ist als ein tiefprofilierter Reifen, daß Reifen in kleineren Dimensionen ebenfalls leiser sind und daß es selbstverständlich auch vom Fahrbahnbelag und auch von der Belagstemperatur abhängig ist, wie groß der Anteil des Abrollgeräusches am Vorbeifahrgeräusch ist. Um das Abrollgeräusch von Reifen möglichst leise (objektiv meßbar in dB) und für das menschliche Ohr (subjektive Beurteilung) möglichst angenehm zu gestalten ist es seit längerem üblich, die bekannte Technik der Pitchlängenvariation (in Umfangsrichtung des Laufstreifens verlaufende Profilelemente werden in unterschiedlichen Umfangslängen gewählt und ihre Abfolge aufeinander in Umfangsrichtung wird rechnergestützt optimiert) anzuwenden und ständig weiter zu verbessern. Es hat sich nun herausgestellt, daß dadurch insbesondere eine deutliche Verbesserung des im Innenraum des Fahrzeuges wahrgenommenen Rollgeräusches erzielt wurde, daß aber solche Maßnahmen bisher nicht im gewünschten Ausmaß auf das Vorbeifahrgeräusch Einfluß nahmen. Das liegt insbesondere daran, daß bei der Laufstreifenprofilgestaltung auf eine Vielzahl von anderen Eigenschaften, wie beispielsweise das Wasserableitvermögen, Handlingseigenschaften und Fahrkomfort, geachtet werden muß.

Hier setzt nun die Erfindung ein, deren Aufgabe darin besteht, einen Fahrzeugreifen der eingangs genannten Art so zu gestalten, daß das Vorbeifahrgeräusch merklich verringert wird, wobei gleichzeitig die weiteren Reifeneigenschaften wie etwa das erforderliche Wasserableitvermögen und ebenso ausgewogene Komfort- und Fahrverhaltenseigenschaften, erhalten bleiben sollen.

Gelöst wird die gestellte Aufgabe erfindungsgemäß dadurch, daß zumindest in jenem Profilbereich, welcher bei am Fahrzeug montiertem Reifen der Fahrzeugaußenseite zugeordnet ist, seitliche Rillen angeordnet sind, die in einem Abstand vor dem Laufstreifenrand enden, wobei dieser Laufstreifenrand innerhalb einer zumindest im wesentlichen unprofilierten Profilzone verläuft.

Nach der Erfindung wird der Reifen nun so gestaltet, daß zumindest im Außenschulterbereich keine ausgeprägte Profilierung mit Querrillen bzw. seitlichen Rillen mehr vorgesehen wird. In diesem Schulterbereich fallen somit die dort sonst üblichen und am seitlich abgestrahlten Geräusch beteiligten Profilelemente wie beispielsweise Klötze weg, so daß eine merkliche Reduzierung des Vorbeifahrgeräusches resultiert. Wie sich herausgestellt hat, kann dabei die Wasserableitung zur Laufflächenmitte zu bzw. zur Innenschulter zu erfolgen ohne das Drainagevermögen negativ zu beeinflussen.

Bei einer bevorzugten Ausführungsvariante erfolgt die Entwässerung zur Profilmitte zu. In diesem Fall ist es von Vorteil, wenn die im Laufstreifenmittelbereich verlaufende Umfangsnut eine Breite aufweist, die bis zu 25 mm beträgt, wobei seitliche Rillen von beiden Seiten her in diese Umfangsnut einmünden und insbesondere sämtliche seitliche Rillen in einem Abstand vor den Laufstreifenrändern enden.

Um den Drainageeffekt zu erhöhen ist es dabei von Vorteil, wenn zumindest die im Profilaußenbereich verlaufenden seitlichen Rillen derart gestaltet sind, daß ihre Breite zur breiten Umfangsnut zu insbesondere kontinuierlich größer wird.

Vorteilhafterweise sollte der Abstand der seitlichen Rillen vom jeweiligen Laufstreifenrand zwischen 5 und 30 %, insbesondere zwischen 5 und 15 % der Breite der Bodenaufstandsfläche betragen.

Nach einer weiteren Ausgestaltung der Erfindung ist zwischen den Enden der seitlichen Rillen und dem zugehörigen Laufstreifenrand eine schmale, 1 bis 5 mm breite Umfangsnut angeordnet, deren Abstand vom zugehörigen Laufstreifenrand zwischen 2 und 20 %, insbesondere zwischen 2 und 10% der Breite in der Bodenaufstandsfläche beträgt.

Auf eine Reduzierung des Vorbeifahrgeräusches wirkt es sich ferner günstig aus, wenn in der den Laufstreifenrand umfassenden, zumindest im wesentlichen unprofilierten Profilzone Feineinschnitte einer Breite von kleiner oder gleich 1 mm angeordnet sind, die zumindest im wesentlichen in Profilquerrichtung verlaufen.

Bei einer bevorzugten Ausführungsform der Erfindung bilden die seitlichen Rillen bezüglich der Drehrichtung des Reifens im wesentlichen ein V bzw. einen Pfeil, wobei vorzugsweise die geschlossenen Endbereiche der seitlichen Rillen beim Abrollen des Reifens zuerst mit dem Untergrund in Berühung treten. Diese Maßnahme begünstigt eine Entwässerung zur Profilmitte zu.

Bei einer anderen bevorzugten Ausführungsvariante der Erfindung sind die zur Außenschulter zu verlaufenden seitlichen Rillen als zur Laufflächenmitte zu breiter werdende Rillen gestaltet, wobei die zu den Innenschultern zu verlaufenden Rillen entweder eine konstante Breite aufweisen oder zur Innenschulter zu breiter werden und insbesondere über den Laufstreifenrand im Innenschulterbereich hinaus verlaufen. Durch eine solche Profilgestaltung erfolgt eine Entwässerung zur Laufstreifenprofilmitte und gleichzeitig zur Innenschulter zu.

Nach einer anderen Ausführungsvariante der Erfindung ist das Laufstreifenprofil bezüglich der Äquatorlinie asymmetrisch gestaltet, wobei in dem zur Innenschulter weisenden Profilbereich zumindest eine weitere, gerade verlaufende Umfangsnut vorgesehen ist, die die dort verlaufenden seitlichen Rillen schneidet.

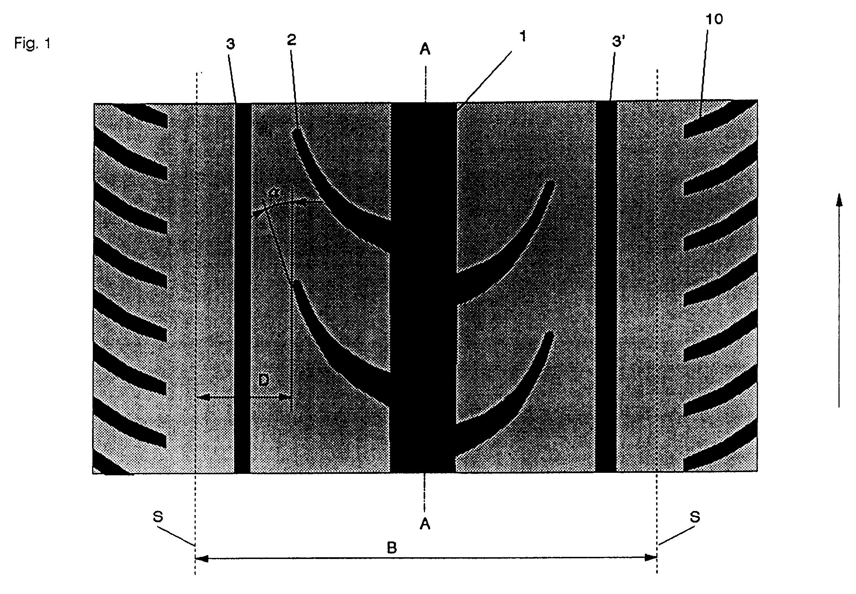

Weitere Merkmale, Vorteile und Einzelheiten der Erfindung werden nun anhand der Zeichnung, die mehrere Ausführungsbeispiele darstellt, näher beschrieben. Dabei ist in den Figuren 1 bis 6 jeweils schematisch eine Teilabwicklung eines Laufflächenprofiles dargestellt.

In sämtlichen Ausführungsbeispielen wird das Laufflächenprofil über seine Breite B, die der Breite in der Bodenaufstandsfläche, bei Normlast und Normluftdruck, wobei der Reifen auf seiner Normfelge angeordnet ist, entspricht, betrachtet. Erwähnt sei ferner, daß der sonstige Aufbau des Reifens in herkömmlicher Art und Weise erfolgen kann, und somit insbesondere zwei Wulstbereiche mit Wulstkernen, eine Radialkarkasse und unterhalb des mit dem Laufflächenprofil versehenen Laufstreifens einen mehrlagigen Gürtel umfaßt.

Das in Fig. 1 dargestellte Laufflächenprofil weist eine entlang der Äquatorlinie A-A verlaufende breite, gerade Umfangsnut 1 auf. Die Breite dieser Umfangsnut 1 beträgt zwischen 8 und 25 mm. In die Umfangsnut 1 münden in jeder Laufflächenhälfte angeordnete seitliche Rillen 2, die als Sackrillen gestaltet sind, so daß ihre axial äußeren Endbereiche geschlossen sind. Beim Abrollen des Reifens sollen die geschlossenen Endbereiche jeweils zuerst mit dem Untergrund in Berührung treten. Die geschlossenen Endbereiche der seitlichen Rillen 2 haben von den Laufstreifenrändern S einen Abstand D, der 5 bis 30%, insbesondere zwischen 5 und 15%, der Breite B entspricht. Die Ausgestaltung der seitlichen Rillen 2 ist ferner so getroffen, daß sie ihre größte Breite in den Einmündungsbereichen zur Umfangsnut 1 aufweisen und ihre geringste Breite am geschlossenen Ende vorliegt. Die Breitenänderung erfolgt dabei bevorzugt stetig. Die Breite der seitlichen Rillen 2 im Mündungsbereich normal zum dortigen Rillenverlauf gemessen sollte 5 mm nicht unter- und 15 mm nicht überschreiten und wird bevorzugt in einem Bereich zwischen 7 und 12 mm gewählt. Die geschlossenen Endbereiche der seitlichen Rillen 2 können entweder spitz zusammenlaufend gestaltet werden oder abgerundet sein und so eine gewisse Mindestbreite von einem bis einigen Millimetern aufweisen. Der Verlauf der seitlichen Rillen 2 ist dabei, wie dargestellt, vorteilhafterweise leicht gekrümmt, so daß Tangenten an die geschlossenen Endbereiche entweder bis zu in Umfangsrichtung weisend verlaufen oder mit der Umfangsrichtung einen Winkel α von bis zu 70° einschließen. Zum Einmündungsbereich zu wird dieser Winkel größer und beträgt bis zu 90°.

Innerhalb der Bodenaufstandsfläche kann ferner zwischen den Laufstreifenrändern S und den geschlossenen Endbereichen der seitlichen Rillen 2 je eine weitere, insbesondere schmale, 1 bis 5 mm breite Umfangsnut 3 angeordnet, deren Abstand von den Laufstreifenrändern zwischen 2 und 20 %, insbesondere zwischen 2 und 10 % der Breite B beträgt. Es ist ferner möglich, diese weiteren Umfangsnuten so anzuordnen, daß sie die seitlichen Rillen schneiden.

Darüberhinaus können außerhalb der Laufstreifenränder S zusätzliche, im wesentlichen axial verlaufende Nuten 10 angeordnet werden, die beim Kurvenfahren unter nassen Fahrbedingungen die Entwässerungswirkung begünstigen können. Die Nuten 10 verlaufen leicht gekrümmt, in diesem Ausführungsbeispiel gleichsinnig zur Bogenform der Rillen 2. Auf diese Nuten 10 kann jedoch auch verzichtet werden.

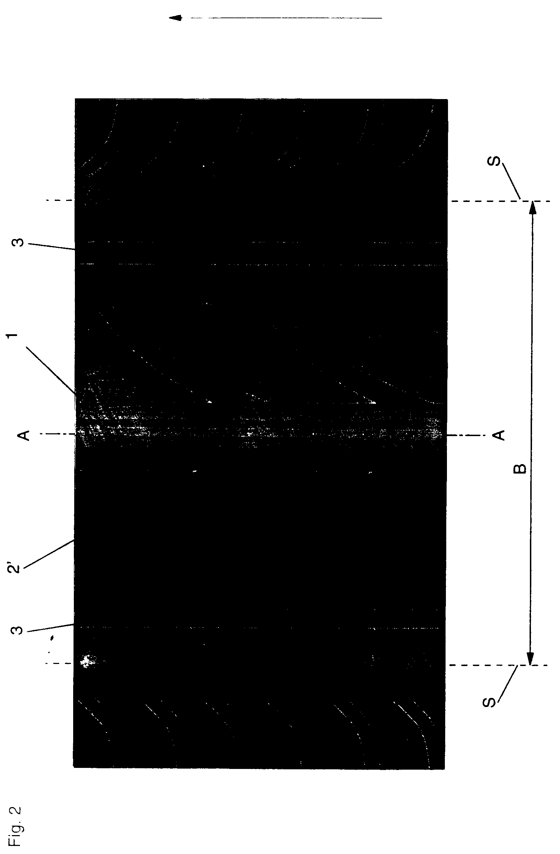

Das in Fig. 2 dargestellte Laufflächenprofil umfaßt ebenfalls eine breite Umfangsnut 1, schulterseitig gelegene schmale Umfangsnuten 3 und seitliche Rillen 2', deren Verlauf, abweichend vom Ausführungsbeispiel nach Fig. 1, so gewählt ist, daß in den Einmündungsbereichen zur breiten Umfangsnut 1 Tangenten an die seitlichen Rillen 2' einen Winkel β mit der Umfangsrichtung einschließen, der kleiner ist, als der Winkel β' von Tangenten an die geschlossenen Endbereichen. Dabei kann der Winkel β bevorzugt zwischen 20 bis 80° betragen, der Winkel β' zwischen 45 und 90°. Außerhalb der Laufstreifenränder S sind wiederum Nuten 10 angeordnet, die leicht gebogen verlaufen.

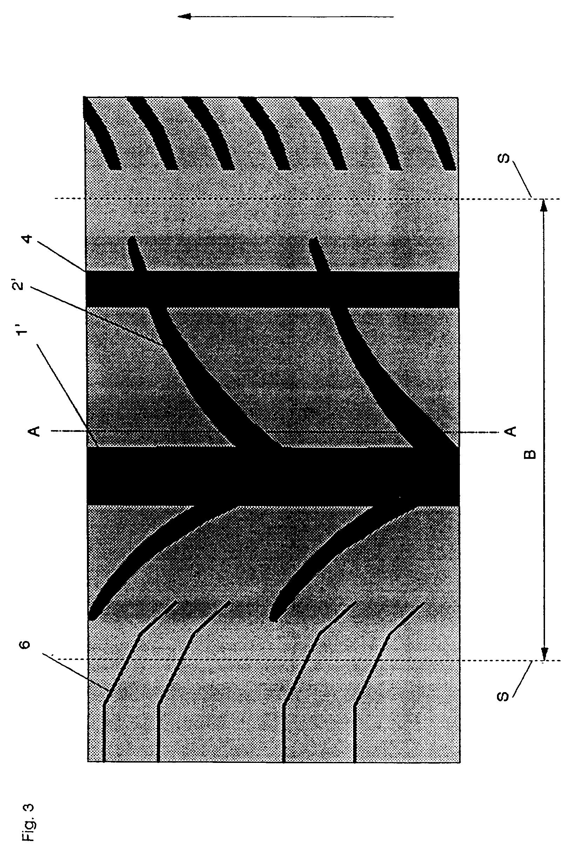

Bei dem in Fig. 3 dargestellten Ausführungsbeispiel eines Laufflächenprofiles ist ebenfalls im Mittelbereich eine breite Umfangsnut 1' vorgesehen, die gegenüber der Äquatorlinie A-A, vorzugsweise zur Außenschulter zu, versetzt ist, so daß ein asymmetrisches Laufflächenprofil geschaffen wird. Parallel zu dieser breiten Umfangsnut ist eine weitere Umfangnut 4 von geringerer Breite als die mittlere Hauptumfangsnut 1' in jenem Laufflächenbereich angeordnet, der schließlich bei Montage des Reifens an einem Fahrzeug bevorzugt der Innennseite zugeordnet ist. Die Umfangnut 4 kreuzt in dieser Laufflächenhälfte die seitlichen Rillen 2', die von ihrer Grundgestalt her jenen entsprechen, die im in Fig. 2 dargestellten Ausführungsbeispiel enthalten sind. Zusätzlich sind in der Außenschulter Feineinschnitte 6 mit einer Breite ≦ 1 mm vorgesehen, die zumindest im wesentlichen in Axialrichtung verlaufen und, abweichend von der dargestellten Form, auch bogenförmig gekrümmt, zick-zack- oder wellenförmig gestaltet sein können.

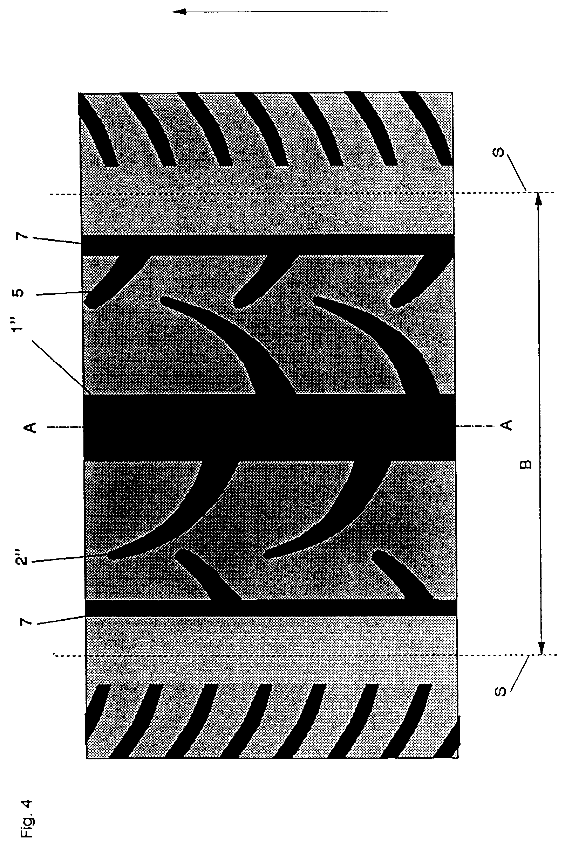

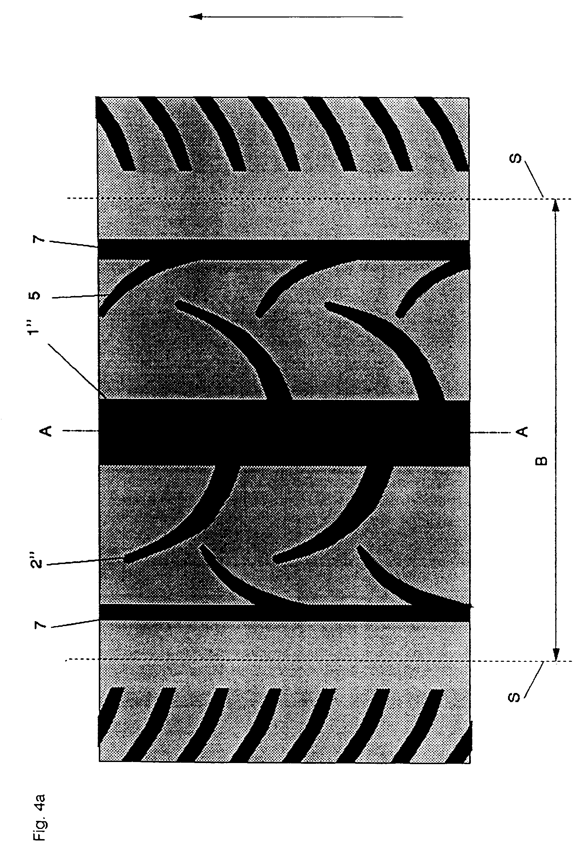

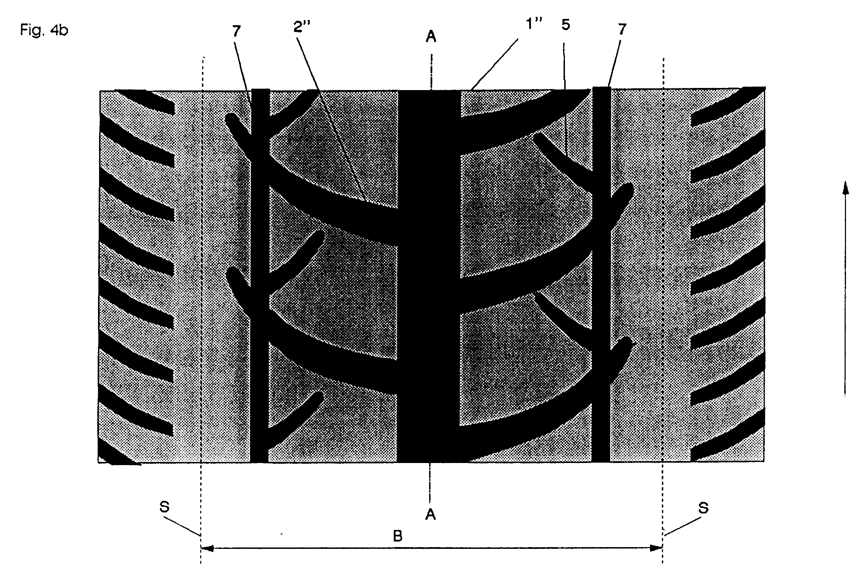

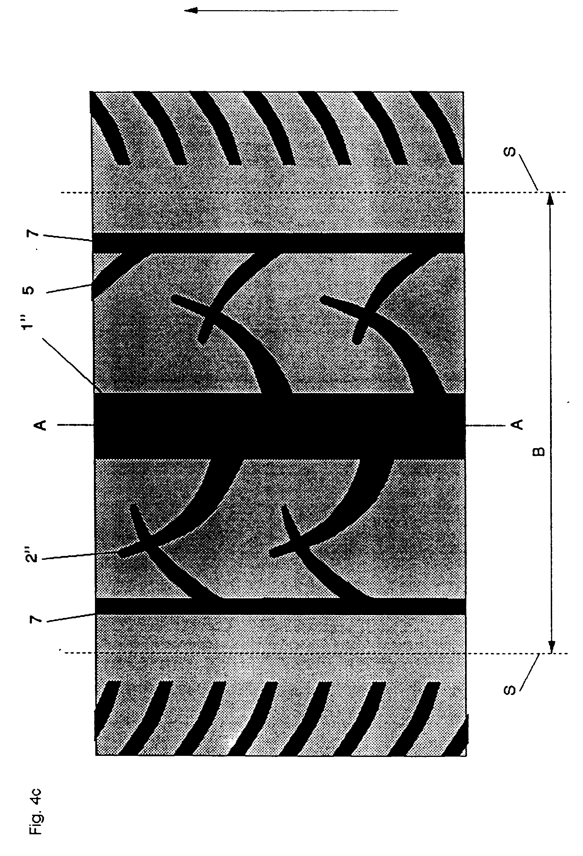

In Fig. 4 ist eine Ausführungsvariante dargestellt, bei der wiederum eine breite Umfangsnut 1'' entlang der Äquatorlinie A-A angeordnet ist, in die seitliche Rillen 2'' einmünden, die von ihrer Grundgestalt jenen entsprechen, wie sie im Ausführungsbeispiel gemäß Fig. 1 dargestellt sind. Bei dieser Ausführungsvariante ist ferner je eine weitere Umfangsnut 7 an den Laufflächenrandbereichen angeordnet, in welche weitere seitliche Rillen 5 einmünden, die ebenfalls als Sackrillen ausgebildet sind und deren geschlossene Endbereiche zur Laufflächenmitte zu weisen. Von ihrer grundsätzlichen Ausgestaltung her können diese weiteren seitlichen Rillen 5, wie dargestellt, den seitlichen Rillen 2'' zumindest im wesentlichen entsprechen.

Im Ausführungsbeispiel nach Fig. 4 sind sämtliche seitliche Rillen 2'' und 5 derart bogenförmig gekrümmt, daß sämtliche Rillen 2'' und 5 bezüglich der bevorzugten Abroll-bzw. Fahrtrichtung des Reifens einen konkaven Kurvenverlauf aufweisen. In den Fig. 4a, 4b und 4c sind nun weitere Varianten der Ausführungsform nach Fig. 4 dargestellt. In Fig. 4a sind dabei die seitlichen Rillen 2'' und die seitlichen Rillen 5 derart bogenförmig verlaufend, daß die Rillen 2'' bezüglich der bevorzugten Abrollrichtung einen konkaven und die Rillen 5 einen konvexen Verlauf haben. Die geschlossenen Endbereiche der Rillen 2'' und 5 reichen jeweils in den Bereich zwischen zwei benachbarte Rillen 5 und 2''.

Fig. 4b zeigt eine Ausführungsform, bei der die seitlichen Rillen 2'' die in der Nähe des Laufstreifenrandes verlaufende schmälere Umfangsnut 7 schneiden. Die von dieser Umfangsnut 7 zur Laufflächenmitte zu ausgehenden seitlichen Rillen 5 sind als relativ kurze Sackrillen gestaltet. Bei dem in Fig. 4c dargestellten Ausführungsbeispiel sind die seitlichen Rillen 2'' mit einem bezüglich der bevorzugten Abrollrichtung konkaven Verlauf und die seitlichen Rillen 5 mit einem konvexen Verlauf gestaltet Dabei kreuzen einander die seitlichen Rillen 2'' und 5 im Bereich ihrer geschlossenen Endabschnitte.

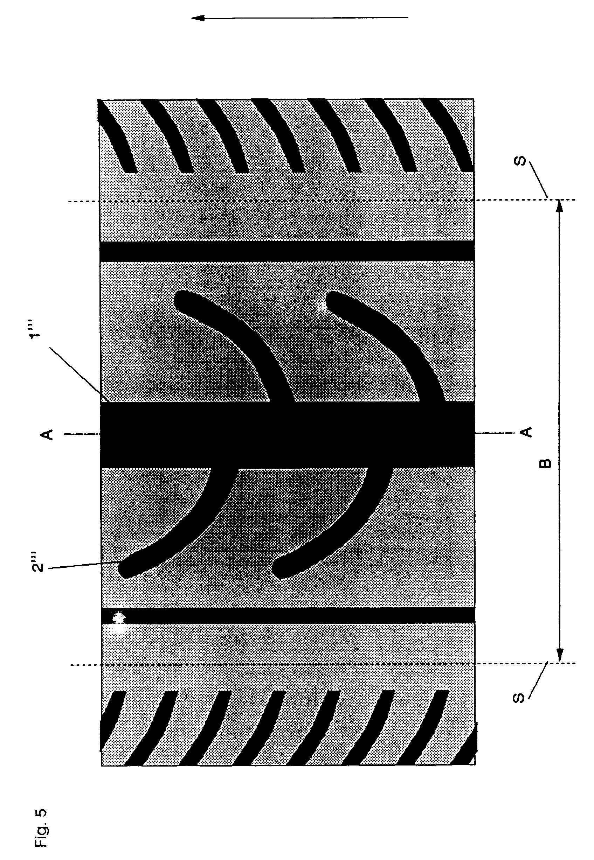

Fig. 5 zeigt eine Ausführungsvariante, bei der die in eine breite Umfangsnut 1''' mündenden seitlichen Rillen 2''' zumindest im wesentlichen über ihren Verlauf gleiche Breite aufweisen. Ansonsten stimmt dieses Ausführungsbeispiel mit jenem gemäß Fig. 1 überein.

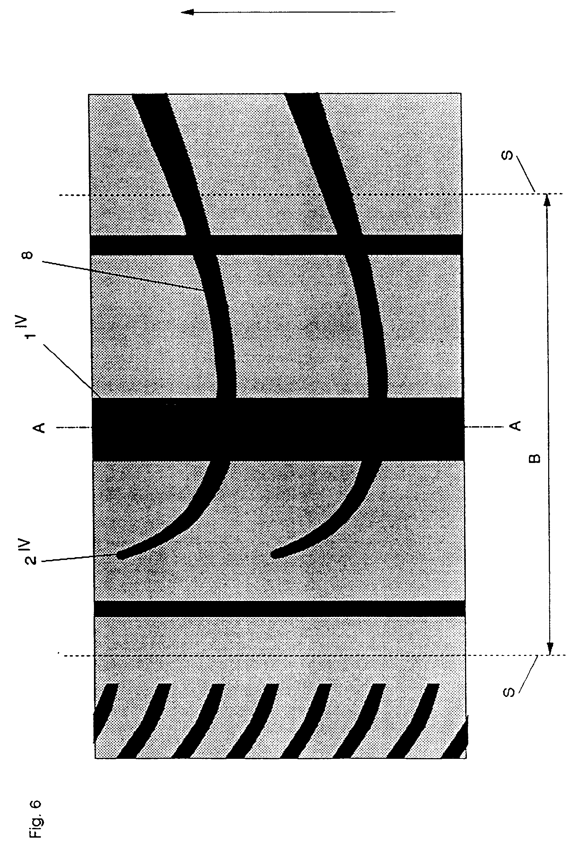

In Fig. 6 ist wieder eine asymmetrische Ausführungsvariante dargestellt. Die seitlichen Rillen 2^{IV}, die bei Montage des Reifens an einem Fahrzeug dessen Außenseite zugeordnet sind, reichen, wie bei den vorhergehenden Ausführungsbeispielen, nicht bis zum Laufstreifenrand, wogegen die von der breiten mittleren Umfangsnut 1^{IV}, zur Innenschulter zu verlaufenden seitlichen Rillen 8 über den Laufstreifenrand hinaus verlaufen. Die seitlichen Rillen 8 können dabei, normal zu ihrer Mittellinie gemessen, eine konstante bzw. im wesentlichen konstante Breite aufweisen, oder auch zu ihren über die Innenschulter hinaus verlaufenden Endbereichen zu breiter werden.

Es wird darauf verwiesen, daß weitere Kombinationen der in den einzelnen Zeichnungsfiguren dargestellten Profile untereinander möglich sind. Diese Profile können ferner selbstverständlich auch mit weiteren Profilelementen, wie Lamellenfeineinschnitten, Entlüftungsrillen und weiteren Umfangsnuten kombiniert werden. Zur mittleren breiten Umfangsnut wird vermerkt, daß diese mit abgeschrägten Seitenflanken versehen sein kann, so daß im Neuzustand des Reifens die Breite dieser Umfangsnut sehr groß, etwa bis zu 50 mm, sein kann.

## Patentansprüche

1. Fahrzeugluftreifen mit einem Laufflächenprofil, welches im Mittelbereich zumindest eine breite, insbesondere gerade verlaufende Umfangsnut aufweist, in welche in Umfangsrichtung voneinander beabstandete seitliche Rillen einmünden, dadurch gekennzeichnet, daß zumindest in jenem Profilbereich, welcher bei am Fahrzeug montiertem Reifen der Fahrzeugaußenseite zugeordnet ist, seitliche Rillen (2,2',2''',2^{IV}) angeordnet sind, die in einem Abstand vor dem Laufstreifenrand enden, wobei dieser Laufstreifenrand innerhalb einer zumindest im wesentlichen unprofilierten Profilzone verläuft.

2. Fahrzeugreifen nach Anspruch 1, dadurch gekennzeichnet, daß die im Laufstreifenmittelbereich verlaufende Umfangsnut (1,1',1'',1''',1^{IV}) eine Breite aufweist, die bis zu 25 mm beträgt, wobei seitliche Rillen (2,2',2''',2^{IV}) von beiden Seiten her in diese Umfangsnut einmünden und insbesondere sämtliche seitliche Rillen in einem Abstand vor den Laufstreifenrändern enden.

3. Fahrzeugreifen nach Anspruch 1 oder 2, dadurch gekennzeichnet, daß zumindest die im Profilaußenbereich verlaufenden seitlichen Rillen (2,2',2'',2^{IV}) derart gestaltet sind, daß ihre Breite zur breiten Umfangsnut (1,1',1'',1^{IV}) zu insbesondere kontinuierlich größer wird.

4. Fahrzeugreifen nach einem der Ansprüche 1 bis 3, dadurch gekennzeichnet, daß der Abstand der seitlichen Rillen (2,2',2'',2''',2^{IV}) vom jeweiligen Laufstreifenrand zwischen 5 und 30 %, insbesondere zwischen 5 und 15 % der Breite der Bodenaufstandsfläche betragen.

5. Fahrzeugreifen nach einem der Ansprüche 1 bis 4, dadurch gekennzeichnet, daß zwischen den Enden der seitlichen Rillen (2,2',2'',2''',2^{IV}) und dem zugehörigen Laufstreifenrand eine schmale, 1 bis 5 mm breite Umfangsnut (4') angeordnet ist, deren Abstand vom zugehörigen Laufstreifenrand zwischen 2 und 20 %, insbesondere zwischen 2 und 10 % der Breite in der Bodenaufstandsfläche beträgt.

6. Fahrzeugreifen nach einem der Ansprüche 1 bis 5, dadurch gekennzeichnet, daß in der den Laufstreifenrand umfassenden, zumindest im wesentlichen unprofilierten Profilzone Feineinschnitte (6) einer Breite von kleiner 1 mm angeordnet sind, die zumindest im wesentlichen in Profilquerrichtung verlaufen.

7. Fahrzeugreifen nach einem der Ansprüche 1 bis 6, dadurch gekennzeichnet, daß die seitlichen Rillen (2,2',2'',2''',2^{IV}) bezüglich der Drehrichtung des Reifens im wesentlichen ein V bzw. einen Pfeil bilden, wobei vorzugsweise die geschlossenen Endbereiche der seitlichen Rillen (2,2',2'',2''',2^{IV}) beim Abrollen des Reifens zuerst mit dem Untergrund in Berührung treten.

8. Fahrzeugreifen nach einem der Ansprüche 1 bis 7, dadurch gekennzeichnet, daß die zur Außenschulter zu verlaufenden seitlichen Rillen (2^{IV}) als zur Laufflächenmitte zu beiter werdende Rillen gestaltet sind, wobei die zu den Innenschultern zu verlaufenden Rillen (8) entweder eine konstante Breite aufweisen oder zur Innenschulter zu breiter werden und insbesondere über den Laufstreifenrand im Innenschulterbereich hinaus verlaufen.

9. Fahrzeugreifen nach einem der Ansprüche 1 bis 8, dadurch gekennzeichnet, daß das Laufstreifenprofil bezüglich der Äquatorlinie asymmetrisch gestaltet ist, wobei in dem zur Innenschulter weisenden Profilbereich zumindest eine weitere, gerade verlaufende Umfangsnut (7) vorgesehen ist, die die dort verlaufenden seitlichen Rillen (2'') schneidet.

10. Fahrzeugreifen nach einem der Ansprüche 1 bis 9, dadurch gekennzeichnet, daß in zumindest einem Schulterbereich, außerhalb der Laufstreifenbreite (B), im wesentlichen in Axialrichtung verlaufende Nuten (10) angeordnet sind.

## Claims

1. Pneumatic vehicle tyre having a tread surface profile which includes in the central region at least one wide circumerential groove, which especially extends in a rectilinear manner and in which lateral notches terminate, said lateral notches being spaced apart from one another when viewed with respect to the circumferential direction, characterised in that lateral notches (2, 2^{I}, 2^{III}, 2^{IV}) are disposed at least in that profile region which is associated with the outside of the vehicle when the tyre is assembled on the vehicle, and said notches end at a spacing in front of the tread strip ends, this tread strip edge extending internally of a profile zone which is at least substantially unprofiled.

2. Vehicle tyre according to claim 1, characterised in that the circumferential groove (1, 1^{I}, 1^{II}, 1^{III}, 1^{IV}), which extends in the central region of the tread strip, has a width which is up to 25 mm, lateral notches (2, 2^{I}, 2^{III}, 2^{IV}) terminating in this circumferential groove from both sides and, more especially, all of the lateral notches ending at a spacing in front of the tread strip edges.

3. Vehicle tyre according to claim 1 or 2, characterised in that at least the lateral notches (2, 2^{I}, 2^{II}, 2^{IV}), which extend in the external profile region, are configured in such a manner that their width continuously becomes greater, more especially towards the wide circumferential groove (1, 1^{I}, 1^{II}, 1^{IV}).

4. Vehicle tyre according to one of claims 1 to 3, characterised in that the spacing between the lateral notches (2, 2^{I}, 2^{II}, 2^{III}, 2^{IV}) and the respective tread strip edge is between 5 and 30 %, more especially between 5 and 15 % of the width of the ground engaging surface.

5. Vehicle tyre according to one of claims 1 to 4, characterised in that a narrow circumferential groove (4^{I}), having a width of between 1 and 5 mm, is disposed between the ends of the lateral notches (2, 2^{I}, 2^{II}, 2^{III}, 2^{IV}) and the associated tread strip edge, the spacing between said groove and the associated tread strip edge being between 2 and 20 %, more especially between 2 and 10 % of the width in the ground engaging surface.

6. Vehicle tyre according to one of claims 1 to 5, characterised in that fine incisions (6), having a width of less than 1 mm, are disposed in the profile zone, which includes the tread strip edge and is at least substantially unprofiled, and extend at least substantially in the transverse direction of the profile.

7. Vehicle tyre according to one of claims 1 to 6, characterised in that the lateral notches (2, 2^{I}, 2^{II}, 2^{III}, 2^{IV}) form substantially a V, or respectively an arrow, in respect of the direction of rotation of the tyre, the closed end regions of the lateral notches (2, 2^{I}, 2^{II}, 2^{III}, 2^{IV}) preferably coming into contact initially with the underlying ground during the rolling movement of the tyre.

8. Vehicle tyre according to one of claims 1 to 7, characterised in that the lateral notches (2^{IV}), which extend towards the external shoulder, are configured as grooves which become wider towards the centre of the tread surface, the grooves (8) extending towards the internal shoulders and either having a constant width or becoming wider towards the internal shoulder and extending more especially beyond the tread strip edge in the internal shoulder region.

9. Vehicle tyre according to one of claims 1 to 8, characterised in that the tread strip profile has an asymmetrical configuration in respect of the centre line, at least one additional rectilinearly extending circumferential groove (7) being provided in the profile region, which is orientated towards the internal shoulder, and intersecting the lateral notches (2^{II}) extending there.

10. Vehicle tyre according to one of claims 1 to 9, characterised in that grooves (10), which extend substantially in the axial direction, are disposed in at least one shoulder region, externally of the tread strip width (B).

## Revendications

1. Bandage pneumatique pour véhicule, muni d'un profil de surface de roulement présentant, dans la zone centrale, au moins une gorge circonférentielle large à étendue notamment rectiligne, dans laquelle débouchent des rainures latérales distantes les unes des autres dans le sens périphérique, caractérisé par le fait que des rainures latérales (2, 2', 2''', 2^{IV}), disposées au moins dans la région profilée qui est affectée au côté extérieur du véhicule lorsque le pneumatique est monté sur ledit véhicule, s'achèvent à distance avant le bord de la bande de roulement, ce bord de la bande de roulement s'étendant dans les limites d'une zone du profil qui est, au moins pour l'essentiel, dépourvue de profilage.

2. Bandage pneumatique pour véhicule, selon la revendication 1, caractérisé par le fait que la gorge circonférentielle (1, 1', 1'', 1''', 1^{IV}) s'étendant dans la zone centrale de la bande de roulement présente une largeur mesurant jusqu'à 25 mm, des rainures latérales (2, 2', 2''', 2^{IV}) débouchant dans cette gorge circonférentielle à partir des deux côtés et, en particulier, toutes les rainures latérales s'achevant à distance avant les bords de la bande de roulement.

3. Bandage pneumatique pour véhicule, selon la revendication 1 ou 2, caractérisé par le fait qu'au moins les rainures latérales (2, 2', 2'', 2^{IV}), s'étendant dans la zone extérieure du profil, sont configurées de telle sorte que leur largeur augmente, en particulier, continûment en direction de la gorge circonférentielle large (1, 1', 1'', 1^{IV}).

4. Bandage pneumatique pour véhicule, selon l'une des revendications 1 à 3, caractérisé par le fait que l'espacement des rainures latérales (2, 2', 2'', 2''', 2^{IV}), par rapport au bord considéré de la bande de roulement, mesure entre 5 et 30 %, notamment entre 5 et 15 % de la largeur de la surface de contact au sol.

5. Bandage pneumatique pour véhicule, selon l'une des revendications 1 à 4, caractérisé par le fait qu'une étroite gorge circonférentielle (4'), de 1 à 5 mm de largeur, est interposée entre les extrémités des rainures latérales (2, 2', 2'', 2''', 2^{IV}) et le bord associé de la bande de roulement, gorge dont l'espacement, par rapport au bord associé de la bande de roulement, mesure entre 2 et 20 %, notamment entre 2 et 10 % de la largeur dans la surface de contact au sol.

6. Bandage pneumatique pour véhicule, selon l'une des revendications 1 à 5, caractérisé par le fait que des entailles fines (6) d'une largeur inférieure à 1 mm, disposées dans la zone du profil au moins pour l'essentiel dépourvue de profilage, et englobant le bord de la bande de roulement, s'étendent au moins pour l'essentiel dans le sens transversal du profil.

7. Bandage pneumatique pour véhicule, selon l'une des revendications 1 à 6, caractérisé par le fait que les rainures latérales (2, 2', 2'', 2''', 2^{IV}) forment respectivement, pour l'essentiel, un V ou une flèche par rapport à la direction de rotation du pneumatique, les régions extrêmes fermées des rainures latérales (2, 2', 2'', 2''', 2^{IV}) venant, de préférence, initialement en contact avec le sol lors du roulement du pneumatique.

8. Bandage pneumatique pour véhicule, selon l'une des revendications 1 à 7, caractérisé par le fait que les rainures latérales (2^{IV}), s'étendant en direction de l'épaulement extérieur, sont configurées comme des rainures s'élargissant vers le centre de la surface de roulement, les rainures (8), s'étendant en direction des épaulements intérieurs, présentant alors une largeur constante, ou bien s'élargissant vers l'épaulement intérieur et s'étendant, notamment, au-delà du bord de la bande de roulement dans la région de l'épaulement intérieur.

9. Bandage pneumatique pour véhicule, selon l'une des revendications 1 à 8, caractérisé par le fait que le profil de la bande de roulement est de configuration asymétrique par rapport à la ligne équatoriale, au moins une gorge circonférentielle supplémentaire (7) à étendue rectiligne, prévue dans la région profilée orientée vers l'épaulement intérieur, coupant les rainures latérales (2'') qui s'étendent dans cette zone.

10. Bandage pneumatique pour véhicule, selon l'une des revendications 1 à 9, caractérisé par le fait que des gorges (10), s'étendant pour l'essentiel dans le sens axial, sont disposées dans au moins une région d'épaulement, à l'extérieur de la largeur (B) de la bande de roulement.
